# EUROPÄISCHE PATENTSCHRIFT

(11) **EP 2 890 575 B1**
(45) Veröffentlichungstag und Bekanntmachung des Hinweises auf die Patenterteilung: **26.06.2019**
(21) Anmeldenummer: 13762729.5
(22) Anmeldetag: 22.08.2013
(51) Int. Cl.: B60J 5/10

(54) **SCHALTUNG DER ELEKTRISCHEN BETÄTIGUNG EINER ZWEIGETEILTEN FAHRZEUGHECKKLAPPE**
ELECTRIC ACTIVATING CIRCUIT FOR A TWO-PART REAR VEHICLE DOOR
CIRCUIT D'ACTIONNEMENT ÉLECTRIQUE D'UN HAYON DE VÉHICULE EN DEUX PARTIES

(30) Priorität: 28.08.2012 CZ 20120573
(43) Veröffentlichungstag der Anmeldung: 08.07.2015
(73) Patentinhaber: Skoda Auto A.S., 293 60 Mladá Boleslav (CZ)
(72) Erfinder: CIMRMAN, Radek, 294 01 Bakov nad Jizerou (CZ); TOPEK, Miroslav, 277 41 Kly (CZ); MARECEK, Jan, 446 01 Jablonec nad Nisou (CZ); RAKUSAN, Miroslav, 294 06 Nová Telib (CZ)
(86) Internationale Anmeldenummer: PCT/CZ2013/000099
(87) Internationale Veröffentlichungsnummer: WO 2014/032632

(56) Entgegenhaltungen:
- EP-B- 2 129 539
- WO-A1-2008/119304
- DE-A1-102006 013 735

## Beschreibung

### Technisches Gebiet

Die Erfindung betrifft eine Schaltung zur elektrischen Betätigung einer zweigeteilten Fahrzeugheckklappe. Für die Wahl, ob nur der untere Teil der Heckklappe oder die ganze Heckklappe geöffnet werden soll, dient die Schaltung gemäß der vorliegenden Erfindung.

### Bisheriger Stand der Technik

In der Praxis ist aus dem Stand der Technik eine Verriegelungseinheit für eine erste Klappe, eine zweite Klappe und einen als Fahrzeugkarosserie ausgebildeten Träger bekannt, die ein Verriegelungselement und eine antreibbare Betätigungseinrichtung umfasst. Diese ist in der Patentschrift EP 1963601 beschrieben.

In der Patentschrift EP 2099629 ist ein innoviertes Sicherungselement der Einhängung der zweigeteilten Fahrzeugheckklappe beschrieben. Aus der Schrift EP 2129539 ist dann eine elektrische Betätigung der zweigeteilten Fahrzeugheckklappe bekannt.

Der Nachteil der bekannten Lösung nach dem Stand der Technik ist die relativ lange Zeit (bis zu 2 Sekunden) für das Öffnen der aus den miteinander gekoppelten ersten und zweiten Klappe bestehenden ganzen zweigeteilten Heckklappe, bzw. für das Verstellen des gesamten Mechanismus aus der ersten in die zweite Stellung.

Dieser Nachteil wurde durch eine aus einer Sperrscheibe und einer Sperrplatte bestehende Betätigungseinrichtung der zweigeteilten Fahrzeugheckklappe gelöst, die in der beim Amt für gewerbliches Eigentum in Prag eingereichten Anmeldung der Erfindung CZ 2011-565 beschrieben ist.

Eine Lösung der elektrischen Betätigung des Öffnens solcher innovierten zweigeteilten Fahrzeugheckklappe ist nicht bekannt

### Darstellung der Erfindung

Die Lösung der elektrischen Betätigung des Öffnens solcher innovierten zweigeteilten Fahrzeugheckklappe bietet die vorliegende Erfindung.

Die durch einen Oberteil und einen Unterteil gebildete zweigeteilte Fahrzeugheckklappe wird mit einem einzigem Steuergerät betätigt, das aufgrund von Signalen vom Schalter der unteren Klappe und vom Schalter der Heckklappe, wobei diese beiden Schalter am Unterteil der Heckklappe angeordnet sind, die Stellelemente, das untere Schloss, den Anzieher und Mikroschalter ansteuert. Die Stellelemente sind im Kofferraum der Karosserie angeordnet und bestehen aus einem Motor, der über das Getriebe das große Zahnrad antreibt, wobei die beiden Endlagen mit dem Kontrollschalter des unteren Teils und dem Kontrollschalter, der Heckklappe signalisiert werden.

Die Schaltung zur elektrischen Betätigung einer durch einen Oberteil und einen Unterteil gebildeten zweigeteilten Fahrzeugheckklappe ist dadurch gekennzeichnet, dass der Unterteil einen Schalter des unteren Teils aufweist, der das untere Schloss betätigt, welches das Verbinden und Lösen des Unterteils und der Karosserie sicherstellt. Ferner weist die Schaltung einen Schalter der Heckklappe auf, der zur Betätigung der im Kofferraum der Karosserie angeordneten Stellelemente und des unteren Schlosses dient, welches das Verbinden und Lösen der Heckklappe und der Karosserie sicherstellt.

Durch die Betätigung einer Taste bzw. eines Schalters wird nur der untere Teil geöffnet. Durch die Betätigung der zweiten Taste bzw. Schalters wird die ganze zweigeteilte Heckklappe geöffnet, wobei nach der Betätigung dieser Taste zuerst die Verstellung der Stellelemente aktiviert und nachfolgend die ganze geteilte Heckklappe geöffnet wird. Um die ganze zweigeteilte Heckklappe zu öffnen, müssen nicht mehr zwei Tasten betätigt werden - eine für die Verstellung der Stellelemente und zweite für das eigentliche Öffnen der Heckklappe, wie aus dem Stand der Technik bekannt ist. Die Gesamtdauer für das Öffnen der ganzen zweigeteilten Heckklappe wird von 2s auf weniger als 0,8s verkürzt.

### Übersicht der Figuren der Zeichnungen

Die Erfindung wird anhand schematischer Zeichnungen näher erläutert, wobei die Fig. 1 die Heckklappe in der geschlossenen Stellung darstellt. Die Fig. 2 stellt die Heckklappe nur mit geöffnetem unterem Teil und die Fig. 3 die als Ganzes geöffnete Heckklappe dar. Die Fig. 4 stellt eine schematische Ansicht der Schaltung der elektrischen Betätigung der zweigeteilten Fahrzeugheckklappe dar. Die Fig. 5 stellt die schematische Ansicht der elektrischen Schaltung des Stellelementes dar. Die Fig. 6 stellt das Stellelement im Schnitt dar.

### Ausführungsbeispiele der Erfindung

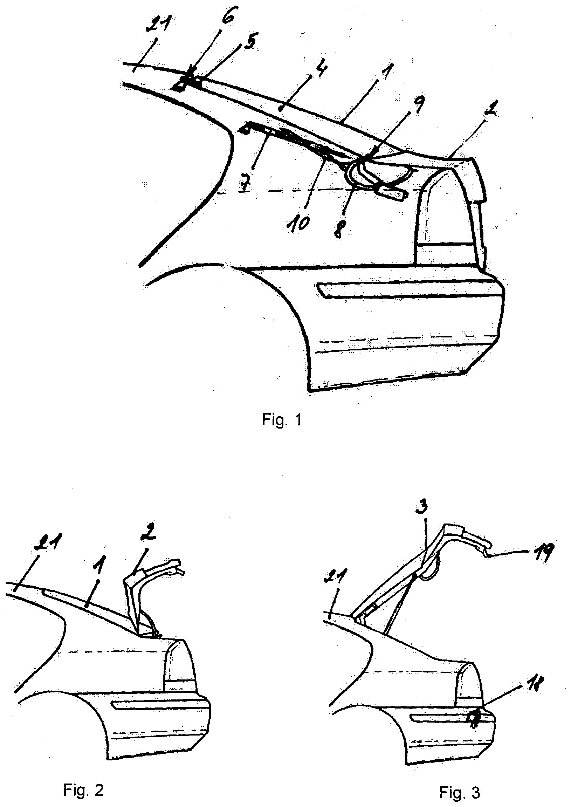

Die zweigeteilte Fahrzeugheckklappe 3 nach Fig. 1 bis 3 umfasst einen Oberteil 1 und einen Unterteil 2. Der untere Teil 2 weist am unteren Rand das untere Schloss 19 zur Aufnahme der an der hinteren Schwelle des Kofferraumes der Karosserie 21 angeordneten Öse 18 auf. Der Oberteil 1 weist eine Verglasung 4 auf und ist mittels des ersten Paares der Einachsscharniere 5 an der Karosserie 21 aufklappbar um die Achse 6 befestigt. Zwischen der Karosserie 21 und dem Oberteil 1 ist das erste Paar der Gasdruckfedern 7 angeordnet. Am unteren Rand des Oberteils 1 ist mittels deszweiten Paares der Einachsscharniere 8 der Unterteil 2 aufklappbar um die Achse 9 befestigt. Zwischen dem Oberteil 1 und dem Unterteil 2 ist das zweite Paar der Gasdruckfedern 10 angeordnet.

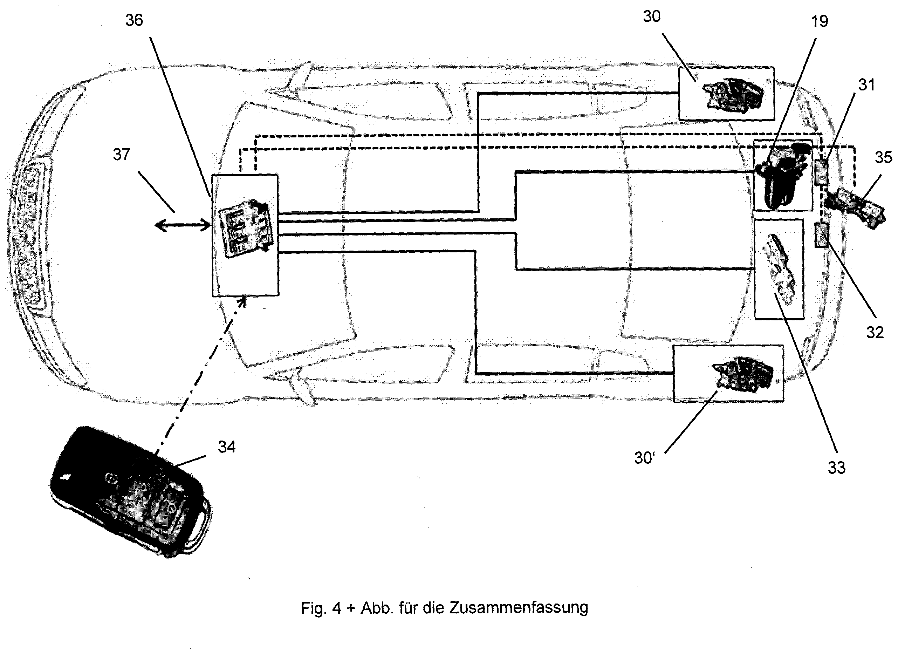

Der Fig. 4 kann die Schaltung der erfindungsgemäßen elektrischen Betätigung der zweigeteilten Fahrzeugheckklappe entnommen werden.

Der Unterteil 2 der zweigeteilten Heckklappe 3 weist einen- Schalter 32 auf, der das untere Schloss 19, betätigt, welches die Verbindung des Unterteils 2 und der Karosserie 21 sicherstellt. Mit dem Schalter 32 kann nur der Unterteil 2 geöffnet werden, das heißt, dass der Oberteil 1 und die Karosserie 21 miteinander fest verbünden sein können.

Des Weiteren befindet sich am Unterteil 2 der Schalter des Oberteils 31, der zur Betätigung der im Kofferraum der Karosserie 21 angeordneten Stellelemente 30, 30' und des unteren Schlosses 19 dient, welches das Verbinden und/oder Lösen der zweigeteilten Heckklappe 3 und der Karosserie 21 sicherstellt.

Nach Betätigung des Schalters 32, der am häufigsten in der Verprägung im Unterteil 2 - und zwar meistens mittig - angeordnet ist, wird die kleine Kofferraumklappe bzw. der Unterteil 2 geöffnet (selbsttätig mit Hilfe der Gasdruckfeder 10). Gleiches Ergebnis wird erzielt, indem statt der Betätigung des Schalters 32 die Taste 34 an der Fernbedienung lange gedrückt gehalten wird. Durch das Drücken der Taste 31 werden die Stellelemente 30, 30' aktiviert und nachfolgend die große Kofferraumklappe bzw. zweigeteilte Heckklappe 3 entriegelt, welche dann manuell aufgezogen werden kann.

Soll die ganze Heckklappe 3 geöffnet werden, muss also nur der Schalter 31 betätigt werden, der am häufigsten in der Verprägung im Unterteil 2 - und zwar rechts oder eventuell links von der Drucktaste 32 angeordnet ist. Hiermit werden mit Hilfe der Stellelemente 30, 30' der Oberteil 1 und der Unterteil 2 miteinander fest verbunden, wobei die Verbindung des Oberteils 1 und der Karosserie 21 gleichzeitig gelöst wird. Der gesamte Vorgang dauert höchstens 0,8 Sekunden gegenüber den rund 2 Sekunden nach dem Stand der Technik. Die Heckklappe 3 kann dann mit Hilfe eines Griffes, der meistens als Verprägung im Unterteil 2 ausgebildet wird, geöffnet werden.

Nachdem die Heckklappe 3, wieder geschlossen ist, nehmen die Stellelemente wieder die Ausgangsposition ein, d.h. mit dem Schalter 32 kann nur der Unterteil 2 geöffnet werden.

Ist das Fahrzeug verriegelt, so ist die Betätigung blockiert und weder der Unterteil 2, noch die ganze Heckklappe 3 geöffnet werden können.

In einer weiteren vorteilhaften Ausführung wird beim Schließen der Heckklappe 3 oder des Unterteils 2 von der Steuereinheit der Anzieher 33 angesteuert, welcher das Schließen erleichtert, indem er den Widerstand der an der Karosserie angeordneten umlaufenden Dichtung der Heckklappe 3 zu überwinden hilft.

Die elektrische Betätigung wird mit einer einzigen Steuereinheit 36 gesteuert, welche die Signale von dem Entriegelungsschalter 32 und dem Schalter des Oberteils 31 empfängt und abhängig vom Zustand der Signale die Stellelemente 30, 30' und das untere Schloss 19 ansteuert.

In dem unteren Teil des Kofferraumes ist der Mikroschalter 35 angeordnet, welcher das Schließen der zweigeteilten Heckklappe 3 abfragt. In der geöffneten Stellung wird die Betätigung der Stellelemente 30, 30' von der Steuereinheit 36 deaktiviert und in der geschlossenen Stellung wird die Betätigung der Stellelemente 30, 30' von der Steuereinheit 36 aktiviert.

In einer vorteilhaften Ausführung wird der Verstellvorgang der Stellelemente 30, 30' durch Aufleuchten der Bremslichter und/oder des 3. Bremslichtes des Fahrzeuges signalisiert, wobei die Länge dieses Vorganges von der Dauer der Verstellung der Stellelemente 30, 30' von einer Endstellung und die zweite Endstellung abhängt. Diese Funktion ist für das System nicht unbedingt notwendig und muss nicht eingesetzt werden.

Die Lichtstärke der Signalisierung der Verstellung der Stellelemente 30, 30' beträgt 2% der maximalen Leuchtkraft der Bremslichter und/oder des 3. Bremslichtes des Fahrzeuges.

Die Beendigung der Verstellung der Stellelemente 30, 30' wird durch kurzes Aufleuchten und Erlöschen der Bremslichter und/oder des 3. Bremslichtes des Fahrzeuges signalisiert.

Die Lichtstärke der Signalisierung der Beendigung der Verstellung der Stellelemente 30, 30' beträgt 4% der maximalen Leuchtkraft der Bremslichter und/oder des 3. Bremslichtes des Fahrzeuges.

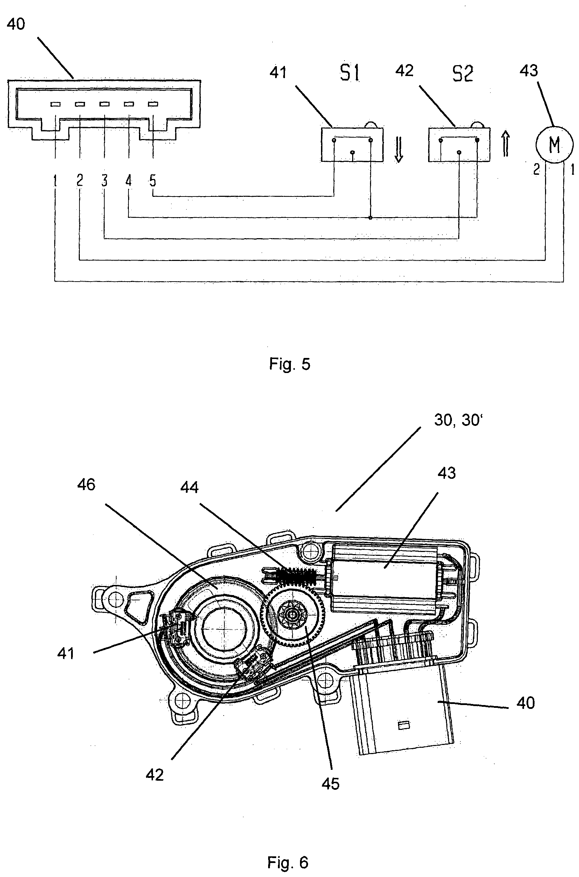

Den Fig. 5 und 6 kann entnommen werden, dass die Stellelemente 30, 30', einen Motor 43 aufweisen, der über das Getriebe, bestehend aus einer am Rotor des Motors 43 angeordnete Schneckenwelle 44 und einem kleinen Zahnrad 45, das drehbarer Zahnrad 46 antreibt, wobei die beiden Endstellungen mit einem Kontrollschalter des Unterteils 41 und einem Kontrollschalter der Heckklappe 42 signalisiert werden. Die Stellelemente 30, 30' sind im Kofferraum der Karosserie 21 angeordnet und betätigen die Schlösser, die in der Heckklappe 3 angeordnet sind und beim Öffnen nur des Unterteils 2 die Verbindung des Oberteils 1 mit der Karosserie 21 bzw. beim Öffnen der ganzen Heckklappe 3 die Verbindung des Oberteils 1 mit dem Unterteil 2 sicherstellen.

Die Schalter 41 und 42 schalten und/oder lösen je nach Position des mit dem Motor 43 betriebenen Zahnrades 46, wobei der Motor in Abhängigkeit vom Signal von der Steuereinheit angesteuert wird Beim Erreichen einer der beiden Endstellungen bleibt der Motor 43 stehen.

### Bezugszeichenliste

- 1: Oberteil
- 2: Unterteil
- 3: Heckklappe
- 4: Verglasung
- 5: erster Einachsenscharnier
- 6: Achse des ersten Scharniers
- 7: erste Gasdruckfeder
- 8: zweiter Einachsenscharnier
- 9: Achse des zweiten Scharniers
- 10: zweite Gasdruckfeder
- 18: Öse
- 19: unteres (Türen-) Schloss
- 21: Karosserie
- 30, 30': Stellelemente
- 31: Schalter der Heckklappe
- 32: Schalter des Unterteils
- 33: Anzieher
- 34: Schalter an der Fernbedienung
- 35: Mikroschalter
- 36: Zentrale Steuereinheit
- 37: Bus
- 40: Stecker
- 41: Kontrollschalter des Unterteils
- 42: Kontrollschalter der Heckklappe
- 43: Motor
- 44: Schnecke
- 45: kleines Zahnrad
- 46: angetriebenes Zahnrad

## Patentansprüche

1. Schaltung zur elektrischen Betätigung einer zweigeteilten Fahrzeugheckklappe (3), die durch einen Oberteil (1) und einem Unterteil (2) gebildet wird, wobei die Schaltung eine Steuereinheit (36) sowie einen ersten Schalter (32) und einen zweiten Schalter (31) aufweist, die am Unterteil anbringbar und mit der Steuereinheit verbunden sind, wobei der erste Schalter zum Lösen des Unterteils dient, und wobei der erste Schalter zur Betätigung eines unteren Schlosses (19) dient, welches dazu vorgesehen ist, das Verbinden und Lösen des Unterteils (2) mit bzw. von der Karosserie (21) sicherzustellen, **dadurch gekennzeichnet, dass** der zweite Schalter (31) zum Lösen der Heckklappe von der Karosserie dient, wobei der zweite Schalter zur Betätigung von im Kofferraum der Karosserie (21) anordenbaren Stellelementen (30, 30') und vom unteren Schloss (19) dient, womit das Verbinden und Lösen der zweigeteilten Heckklappe (3) mit bzw. von der Karosserie (21) sichergestellt werden kann.

2. Schaltung nach Anspruch 1, **dadurch gekennzeichnet, dass** die Stellelemente dazu vorgesehen sind, das Verbinden und Lösen des Oberteils (1) mit bzw. von dem Unterteil (2) und des Oberteils (1) mit bzw. von der Karosserie (21) sicherzustellen.

3. Schaltung nach vorgenannten Ansprüchen, **dadurch gekennzeichnet, dass** die elektrische Betätigung der Fahrzeugheckklappe mit der Steuereinheit (36) gesteuert wird, welche die Signale von dem ersten Schalter (32) und dem zweiten Schalter des Oberteils (31) empfängt, wobei die Steuereinheit abhängig vom Zustand dieser Signale die Stellelemente (30, 30') und das untere Schloss (19) ansteuert.

4. Schaltung nach Anspruch 3, **dadurch gekennzeichnet, dass** die elektrische Steuereinheit (35) Signale vom Schalter (34) einer Fernbedienung empfängt, wobei die Steuereinheit abhängig vom Zustand dieser Signale das untere Schloss (19) ansteuert, welches dazu vorgesehen ist, das Lösen des Unterteils (2) und der Karosserie (21) sicherzustellen.

5. Schaltung nach vorgenannten Ansprüchen, **dadurch gekennzeichnet, dass** sie einen Mikroschalter (35) umfasst, der im Kofferraum des Fahrzeugs anordenbar ist, und welcher das Schließen der zweigeteilten Heckklappe (3) abfragt, wobei in der geöffneten Stellung der Heckklappe die Betätigung der Stellelemente (30, 30') von der Steuereinheit (36) deaktiviert und in der geschlossenen Stellung der Heckklappe die Betätigung der Stellelemente (30, 30') von der Steuereinheit (36) aktiviert wird.

6. Schaltung nach vorgenannten Ansprüchen, **dadurch gekennzeichnet, dass** der Verstellvorgang der Stellelemente (30, 30') durch das Aufleuchten der Bremslichter und/oder des 3. Bremslichtes des Fahrzeuges signalisiert werden kann, wobei die Länge dieses Vorganges von der Dauer der Verstellung der Stellelemente (30, 30') von einer ersten Endstellung in eine zweite Endstellung abhängt.

7. Schaltung nach Anspruch 6, **dadurch gekennzeichnet, dass** die Lichtstärke der Signalisierung der Verstellung der Stellelemente (30, 30') 2% der maximalen Leuchtkraft der Bremslichter und/oder des 3. Bremslichtes des Fahrzeuges betragen kann.

8. Schaltung nach Anspruch 6, **dadurch gekennzeichnet, dass** die Beendigung der Verstellung der Stellelemente (30, 30') durch kurzes Aufleuchten und Erlöschen der Bremslichter und/oder des 3. Bremslichtes des Fahrzeuges signalisiert werden kann.

9. Schaltung nach Anspruch 8, **dadurch gekennzeichnet, dass** die Lichtstärke der Signalisierung der Beendigung der Verstellung der Stellelemente (30, 30') 4% der maximalen Leuchtkraft der Bremslichter und/oder des 3. Bremslichtes des Fahrzeuges betragen kann.

## Claims

1. A circuit for electrically actuating a two-piece tailgate (3) of a vehicle, which is formed by a top part (1) and a bottom part (2), wherein the circuit has a control unit (36) and a first switch (32) and a second switch (31), which can be attached to the bottom part and are connected to the control unit, wherein the first switch is used to release the bottom part, and wherein the first switch is used to actuate a bottom lock (19), which is provided to ensure the connection and release of the bottom part (2) to or from the bodywork (21), **characterized in that** the second switch (31) is used to release the tailgate from the bodywork, wherein the second switch is used to actuate control elements (30, 30'), which can be arranged in the luggage compartment of the bodywork (21), and to actuate the bottom lock (19), with which the connection and release of the two-piece tailgate (3) to or from the bodywork (21) can be ensured.

2. A circuit according to Claim 1, **characterized in that** the control elements are provided to ensure the connection and release of the top part (1) to and from the bottom part (2) and of the top part (1) to and from the bodywork (21).

3. A circuit according to the preceding claims, **characterized in that** the electrical actuation of the tailgate of a vehicle is controlled with the control unit (36), which receives the signals from the first switch (32) and the second switch of the top part (31), wherein the control unit controls the control elements (30, 30') and the bottom lock (19) depending on the state of said signals.

4. A circuit according to Claim 3, **characterized in that** the electrical control unit (35) receives signals from the switch (34) of a remote control, wherein depending on the state of said signals the control unit controls the bottom lock (19), which is provided to ensure the release of the bottom part (2) and the bodywork (21).

5. A circuit according to the preceding claims, **characterized in that** it comprises a micro-switch (35), which can be arranged in the luggage compartment of the vehicle, and which queries the closing of the two-piece tailgate (3), wherein in the open position of the tailgate the actuation of the control elements (30, 30') is deactivated by the control unit (36) and in the closed position of the tailgate the actuation of the control elements (30, 30') is activated by the control unit (36).

6. A circuit according to the preceding claims, **characterized in that** the adjusting operation of the control elements (30, 30') can be signaled by the illumination of the brake lights and/or of the 3^{rd} brake light of the vehicle, wherein the length of said operation depends on the duration of the adjustment of the control elements (30, 30') from a first end position to a second end position.

7. A circuit according to Claim 6, **characterized in that** the luminous intensity of the signaling of the adjustment of the control elements (30, 30') can be 2% of the maximum luminosity of the brake lights and/or of the 3^{rd} brake light of the vehicle.

8. A circuit according to Claim 6, **characterized in that** the completion of the adjustment of the control elements (30, 30') can be signaled by brief illumination and extinguishing of the brake lights and/or the 3^{rd} brake light of the vehicle.

9. A circuit according to Claim 8, **characterized in that** the luminous intensity of the signaling of the completion of the adjustment of the control elements (30, 30') can be 4% of the maximum luminosity of the brake lights and/or the 3^{rd} brake light of the vehicle.

## Revendications

1. Circuit pour l'actionnement électrique d'un hayon de véhicule en deux parties (3), qui est constitué d'une partie supérieure (1) et d'une partie inférieure (2), ce circuit comprenant une unité de commande (36) ainsi qu'un premier commutateur (32) et un deuxième commutateur (31), qui peuvent être montés sur la partie inférieure et qui sont reliés avec l'unité de commande, le premier commutateur servant au détachement de la partie inférieure et le premier commutateur servant à l'actionnement d'une serrure inférieure (19) qui est prévue pour assurer la liaison et le détachement de la partie inférieure (2) avec ou de la carrosserie (21), **caractérisé en ce que** le deuxième commutateur (31) sert au détachement du hayon de la carrosserie, le deuxième commutateur servant à l'actionnement d'éléments de réglage (30, 30') pouvant être disposé dans le coffre de la carrosserie (21) et de la serrure inférieure (19), avec laquelle la liaison et le détachement du hayon en deux parties (3) avec ou de la carrosserie (21) peut être assuré.

2. Circuit selon la revendication 1, **caractérisé en ce que** les éléments de réglage sont prévus pour assurer la liaison et le détachement de la partie supérieure (1) avec ou de la partie inférieure (2) et de la partie supérieure (1) avec ou de la carrosserie (21).

3. Circuit selon les revendications précédentes, **caractérisé en ce que** l'actionnement électrique du hayon de véhicule est contrôlé avec l'unité de commande (36), qui reçoit les signaux provenant du premier commutateur (32) et du deuxième commutateur de la partie supérieure (31), l'unité de commande contrôlant, en fonction de l'état de ces signaux, les éléments de réglage (30, 30') et la serrure inférieure (19).

4. Circuit selon la revendication 3, **caractérisé en ce que** l'unité de commande électrique (35) reçoit les signaux provenant du commutateur (34) d'une télécommande, l'unité de commande contrôlant, en fonction de l'état de ces signaux, la serrure inférieure (19), qui est prévue pour assurer le détachement de la partie inférieure (2) et de la carrosserie (21).

5. Circuit selon les revendications précédentes, **caractérisé en ce qu'**elle comprend un micro-commutateur (35) qui peut être disposé dans une coffre du véhicule, et qui surveille la fermeture du hayon en deux parties (3), moyennant quoi, dans la position ouverte du hayon, l'actionnement des éléments de réglage (30, 30') est désactivé par l'unité de commande (36) et, dans la position fermée du hayon, l'actionnement des éléments de réglage (30, 30') est activé par l'unité de commande (36).

6. Circuit selon les revendications précédentes, **caractérisé en ce que** le processus de réglage des éléments de réglage (30, 30') peut être signalé par l'allumage des feux stop et/ou du troisième feu stop du véhicule, la durée de processus dépendant de la durée du déplacement des éléments de réglage (30, 30') d'une première position finale vers une deuxième position finale.

7. Circuit selon la revendication 6, **caractérisé en ce que** l'intensité lumineuse de la signalisation du déplacement des éléments de réglage (30, 30') peut représenter 2 % de l'intensité lumineuse maximale des feux stop et/ou du troisième feu stop du véhicule.

8. Circuit selon la revendication 6, **caractérisé en ce que** la fin du déplacement des éléments de réglage (30, 30') peut être signalée par un court allumage et extinction des feux stop et/ou du troisième feu stop du véhicule.

9. Circuit selon la revendication 8, **caractérisé en ce que** l'intensité lumineuse de la signalisation de la fin du déplacement des éléments de réglage (30, 30') peut représenter 4 % de l'intensité lumineuse maximale des feux stop et/ou du troisième feu stop du véhicule.
